# EUROPEAN PATENT SPECIFICATION

(11) **EP 1 205 330 B1**
(45) Date of publication and mention of the grant of the patent: **22.10.2008**
(21) Application number: 01126677.2
(22) Date of filing: 08.11.2001
(51) Int. Cl.: B60K 6/547, F16H 61/02, B60W 20/00

(54) **Control device of transmission for hybrid vehicle**
Getriebesteuerungseinrichtung eines Hybridfahrzeugs
Dispositif de commande de la transmission d'un véhicule hybride

(30) Priority: 13.11.2000 JP 2000345114; 05.09.2001 JP 2001268218
(43) Date of publication of application: 15.05.2002
(73) Proprietor: HONDA GIKEN KOGYO KABUSHIKI KAISHA, Minato-ku, Tokyo (JP)
(72) Inventor: Aoki, Yasuo, Wako-shi, Saitama (JP)
(74) Representative: Prechtel, Jörg

(56) References cited:
- DE-A1- 19 528 629
- DE-A1- 19 945 473
- US-A- 5 713 425
- US-A- 5 984 034

## Description

### FIELD OF THE INVENTION

The present invention relates to a control device according to the preamble part of claim 1 for controlling a switching of a transmission at a hybrid vehicle for regenerating a motor when the vehicle is decelerated.

### BACKGROUND OF THE INVENTION

A development has been undertaken to provide a hybrid vehicle equipped with an engine and a motor as a power source to drive a vehicle for a viewpoint of a vehicle mileage improvement or a reduction of an influence that a vehicle exerts on an environment. Of these hybrid vehicles, a parallel hybrid vehicle is a type of hybrid vehicle having an engine and a motor arranged in parallel to select alternatively using these two or to use both of two in accordance to a required driving force or a road condition. This parallel hybrid vehicle can appropriately select an operating ratio of engine and motor in accordance to a required driving force and a road condition, therefore, improving fuel consumption and reducing amount of exhaust gas can be effectively carried out. Also, the parallel hybrid vehicle can further improve fuel efficiency by carrying out a damping regeneration to charge a battery through converting a kinetic energy to an electric energy by a motor when decelerating.

As conventional example of a parallel hybrid vehicle (hereinafter simply called a hybrid vehicle) carrying out the damping regeneration, some of these are disclosed in Japanese laid-open patent application No.9-9415. This hybrid vehicle is arranged to be set such that a transmission is formed as a higher speed stage when a vehicle is decelerated. For example, when a hybrid vehicle having a four shift automatic transmission is stopped from a condition of running in the third speed, first of all, a speed stage of the fourth speed is formed, then it is decelerated by a regenerative braking as it formed a speed stage of the fourth speed for stopping.

Forming a speed stage of high-speed side during deceleration in this way to reduce a drag resistance of engine can reduce heat energy consumed as a frictional heat caused by engine brake. And increasing regenerative power for the amount can increase regenerative power to be charged into a battery connected with a motor.

However, when this hybrid vehicle accelerates again during deceleration, mismatch is often occurred among the rotation speeds of wheel, engine speed and the speed stage of transmission. This mismatch was inconvenient due to a reason of generating a shock when forming a speed stage.

Furthermore, in case of more increasing electric energy collected by a dumping regeneration, it is desirable that a pull sliding resistance is little as much as possible. Consequently, a speed stage responding to higher-speed side or a mechanism to intermit the respective driving system of engine and motor by a clutch are needed to provide. However, these countermeasures were inappropriate because new mechanism is required and the control becomes complicated.

DE 199 45 473 A1 discloses a control device for a transmission for a hybrid vehicle according to the preamble part of claim 1, which comprises an engine and a motor which are connected to driving wheels via a transmission. The motor is operatable to assist the output of the engine or to generate electric energy during regenerative braking. During regenerative braking the engine can be disconnected from the motor by disconnecting a start clutch of the transmission.

A further control device for a transmission for a hybrid vehicle is disclosed in US-A-5 713 425. The known control device comprises an engine, a motor and a transmission, wherein a clutch is provided between the engine and the transmission. During braking the motor will enter a regenerative mode to recover kinetic energy of the vehicle. At that time the clutch is disengaged.

For further illustration of the background art, reference can also be made to US-A-5 984 034 and DE 195 28 629 A1 which describe control devices for transmissions of hybrid vehicles having an electric motor/generator which is operated during regenerative braking in order to recover kinetic energy of the vehicle.

### SUMMARY OF THE INVENTION

Accordingly, the object of the present invention is to provide a control device of a transmission for a hybrid vehicle that is capable of improving recovery efficiency of regenerative energy in dumping regeneration and changing a speed stage smoothly.

The invention solves this object by a control device according to claim 1. Such a control device of transmission for a hybrid vehicle is equipped with an engine, a motor provided as capable of transmitting a power to a vehicle apart from the engine, and a transmission provided in between engine and wheels to have at least one power intermitted device. In the control device of the present invention, a control device of a transmission is arranged so as to have a controller for controlling an intermittent of power intermittent device in accordance to a driving condition and to control a controller for cutting off a power intermittent device when regenerating a motor. This mechanism allows the respective rotation of engine and wheels in a transmission to be cut off completely after a controller cut off a power intermittent device. Accordingly, a kinetic energy of a hybrid vehicle can prevent heat energy caused by a pull sliding of engine from loosing. Consequently, a recovery efficiency of regenerative energy by a motor can be improved. Furthermore, the transmission is one to form a plurality of speed stages by intermitting a plurality of friction elements and the transmission is arranged so as to be capable of selecting a first friction element to form a shift speed just before regenerating a motor and a second friction element which can form lower speed stage rather than a first friction element when regenerating a motor to prepare a first and second friction element under the condition capable of engaging when regenerating a motor.

Generally, when carrying out regenerative braking, a vehicle speed is lower than before regenerating.

Accordingly, as described above, a hybrid vehicle can rapidly form appropriate speed stage in accelerating again after regenerative braking by waiting under the condition that a control device of transmission is capable of forming a speed stage of a low-side (the second speed stage) rather than a speed stage just before dumping regeneration (the first shift stage).

As used herein, the term " preparing under the durable condition "means the following condition respectively. It is the condition capable of forming a speed stage just before regeneration and lower speed stage of that in an automatic transmission using a shift valve, it is the condition of packing unavailable stroke of the subject friction element in a direct control system automatic transmission, and it is the condition of packing an idle part of an actuator for shifting in other type of automatic transmission.

### BRIFE DESCRIPTION OF THE DRAWINGS

Fig.1 is a system diagram of a parallel hybrid vehicle equipped with a hydraulic control device of preferred embodiment.
Fig. 2 is a hydraulic circuit diagram of a hydraulic control device of a preferred embodiment.
Fig.3 is a sequencer diagram indicating an actuation of a shift valve, pressure regulating valve and a control valve of a hydraulic control device when a hybrid vehicle makes a shift change.
Fig.4 is a hydraulic circuit diagram indicating a state maintaining a speed stage of the first speed.
Fig.5 is a hydraulic circuit diagram indicating a state of a transition switching a speed stage of the first speed and a speed stage of the second speed.
Fig.6 is a hydraulic circuit diagram indicating a state maintaining a speed stage of the second speed.
Fig.7 is a hydraulic circuit diagram indicating a state of a transition switching a speed stage of the second speed and a speed stage of the third speed.
Fig.8 is a hydraulic circuit diagram indicating a state maintaining a speed stage of the third speed.
Fig.9 is a hydraulic circuit diagram indicating a state of transition switching a speed stage of the third speed and a speed stage of the fourth speed.
Fig.10 is a hydraulic circuit diagram indicating a state maintaining a speed stage of fourth speed.
Fig.11 is a flow chart in case of carrying out a dumping regeneration by a pressure regulating valve mode in dumping of a hybrid vehicle.
Hig.12 (a) is shift map of shift change in a normal mode and (b) is an explanatory drawing indicating a shift change when dumping regeneration of a pressure regulating valve mode.
Fig.13 is a sequencer diagram indicating an actuation of linear solenoid valve and a pressure-regulating valve in a pressure regulating valve mode.
Fig.14 is a system diagram of a parallel hybrid vehicle equipped with a hydraulic control apparatus of the present embodiment.

### DESCRIPTION OF THE PREFERRED EMBODIMENTS

The embodiment of the present invention will now be described in detail with reference to the drawings.

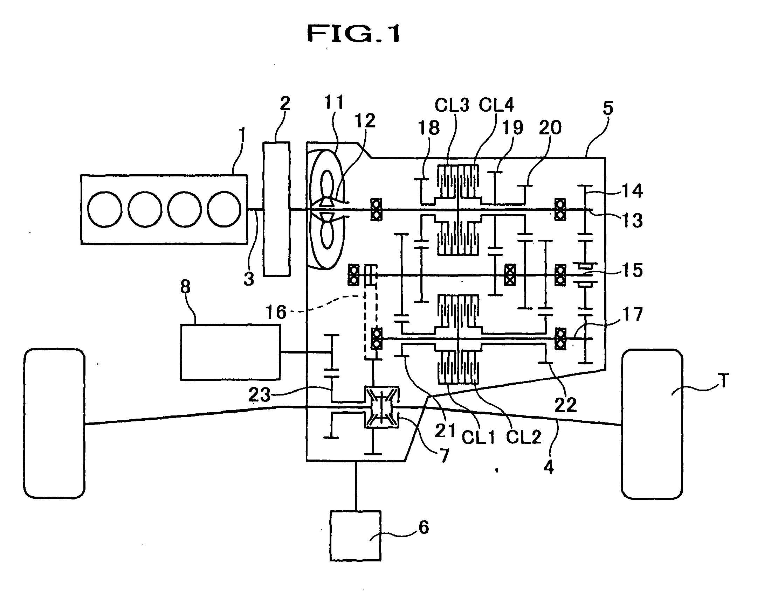

Fig.1 is a system view of a parallel hybrid vehicle in the preferred embodiment. In the following description, the transmission is explained as fourth speed automatic transmission. As shown in Fig.1, a parallel hybrid vehicle (hereinafter simply called a hybrid vehicle) comprises engine 1 for driving wheel T, motor 2 coaxially placed on engine 1, transmission 5 for transmitting rotation speed of a clank shaft 3 rotated by engine 1 and motor 2 to out put shaft 4 after varying rotation speed, hydraulic control device 6 as controller for controlling a transmission 5, and a motor 8 capable of directly connecting with an output shaft 4 through a differential gear 7 of a transmission 5. Also each of these entity are controlled by ECU (electric control unit: not shown). Besides the hydraulic control device 6 and ECU correspond to a control device of a transmission described with a scope of claim.

Hereupon, the transmission 5 has a primary shaft 13 as an input shaft capable of intermitting through a clank shaft 3 and a lock up clutch 12 of a fluid torque converter 11, a secondary shaft 15 capable of interlocking with a primary shaft 13 through a gear train 14, a middle shaft 17 capable of interlocking with a secondary shaft 15 through a gear row 16, and a differential gear 7 for transmitting a rotation of a middle shaft 17 to an output shaft 4.

And a gear line 18 and a hydraulic clutch CL3 forming a speed stage of the third-speed, together with, a gear line 19 and a hydraulic clutch CL4 forming a speed stage of the fourth-speed are placed between a primary shaft 13 and a secondary shaft 15. Besides a gear line 20 for moving backward is also placed between a primary shaft 14 and a secondary shaft 15.

When moving backward, the rotation of a primary shaft 14 is converted to reverse direction by a hydraulic clutch CL4 and a gear line 20 for transmitting to a secondary gear 15 through a driver switching a select lever.

Moreover, a gear line 21 and a hydraulic clutch CL1 forming a speed stage of the first-gear, together with, a gear line 22 and a hydraulic clutch CL2 forming a speed stage of the second-gear are placed between a secondary shaft 15 and a middle shaft 17. What is more, a brake (not shown) to decelerate and stop each pressure oil clutch CL1-CL4 and/or a hydraulic clutch CL1-CL4 correspond to a power intermitting means with a scope of claims, pressing oil clutch CL1-CL4 are simply expressed as clutch CL1∼C4 in following explanation.

ECU is a device to send a drive single to engine 1 and motors 2, 8 by receiving a signal from each kind of sensor such as a vehicle speed sensor (not shown), a sensor to detect a rotation speed of each rotation shafts 3, 4, 13, 15, 17 and a position sensor of a select lever, and to output a control signal for controlling supply and discharge of pressure oil to each clutch CL1-CL4.

For switching a speed stage, switching is carrying out such that ECU outputs a control signal to a hydraulic control device 6 so as to select one of each clutch CL1-CL4 for supplying pressure oil to link a selected clutch CL1-CL4, and a rotation of a primary shaft 13, a secondary shaft 15, or middle shaft 17 are transmitted to a gear train 18-22 twin of the clutch CL1-CL4.

As concerns this hybrid vehicle, improving fuel consumption and reducing emission gas is practical by appropriately combining respective driving of engine 1 and motors 2 and 8 in accordance with a running condition.

For example, in the case where a hybrid vehicle is just started or a required driving force is small, wheel T is driven by transmitting a rotation of a motor 8 to an output shaft 4 through a final gear 23 without running an engine 1.

And when a load applying to a motor 8 became more than a given level, wheel T is driven by using the both respective driving force of a motor 8 and an engine 1 through starting up engine 1 by a motor 2.

Hereupon, the embodiment of the present invention is to efficiently recovery regenerative energy to a battery without a rotation of an engine 1 by cutting off respective rotation of an engine 1 and an output shaft 4 in a transmission 5 through releasing a combination of said all friction element CL1-CKL4. Besides, though recovering regenerative energy during regenerative braking can be also carried out by a motor 2 through a transmission 5, carrying out by a motor 8 is appropriate for a viewpoint of a recovery efficiency.

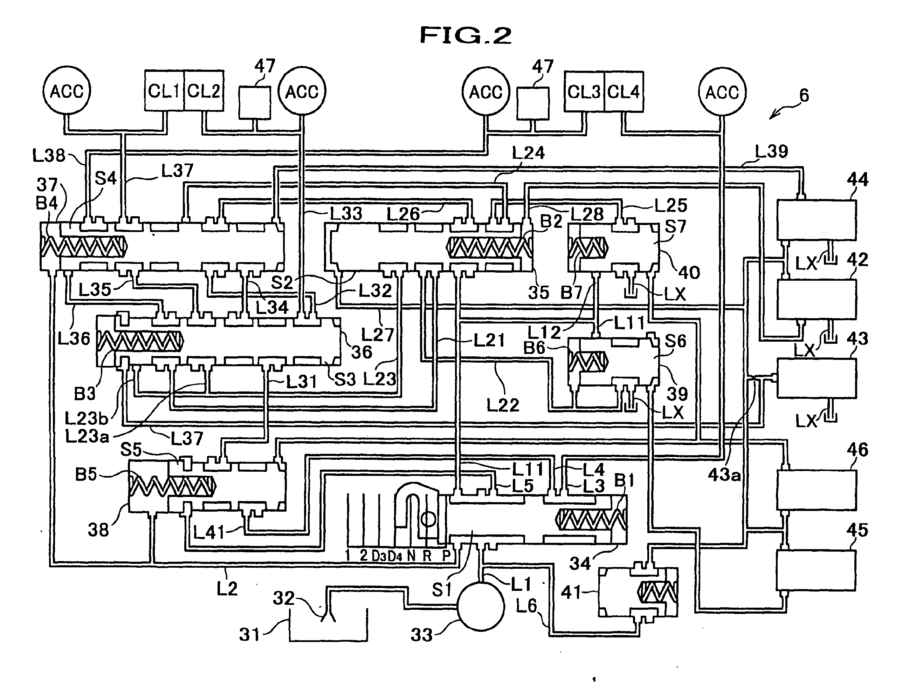

A hydraulic control device 6 to control an intermittent of each friction element CL1-CL4 of a transmission 5 regarding to embodiment of the present invention shall now be described with reference to a hydraulic circuit diagram in Fig.2.

As shown in Fig.2, a hydraulic control device 6 is to press control oil drew by a suspension trainer 32 from an oil pan 31 for appropriately selecting and supplying control oil as pressure oil to each clutch CL1-CL4.

A manual valve 34, a first shift valve 35, a second shift valve 36, a third shift valve 37 and a forth shift valve 38 are provided between the oil pump 33 and each friction element CL1-CL4 to interlock with a select lever for switching a supply root of oil pressure.

Besides, this hydraulic control device 6 has a first pressure regulating value 39 and a second pressure regulating valve 40 as a transmission control valve to smoothly discharge or supply pressure oil from clutch CL1∼CL4 in transition of switching a speed stage.

Each entity of hydraulic control apparatus 6 will be described below
First of all, a manual valve 34 is arranged such that a spool S1 is moved from side to side in accordance to a shift position of a select lever.

In the case where a shift position is in "D4" as an automatic transmission position of low speed trough forth speed, "D3"as an automatic transmission position of low speed trough third speed, "2" as holding position of a second speed, "1" as holding position of a low speed, "P" as parking position, and "N" as a neutral position, a pressure oil line L5 and L11 are connected with each other while a pressure oil line L1 and L2 connected with each other, together with, a pressure oil line L3 and L4 are connected with each other.

The first shift valve 35 is provided to optionally supply the second, third shift valves 36, 37, the first pressure regulating valve 39 and the second pressure regulating valve 40 with pressure oil supplied from a manual valve 34 via a pressure oil line L 11. Concretely, when a spool S2 is in a left side position as indicating in drawing, pressure oil can be supplied to the third shift valve 37 due to a connection of the pressure oil lines L11 with L26. And at the same time, the second pressure regulating valve 39 and the second shift valve 36 can be communicated due to a connection of the pressure oil lines L21 and L22. Furthermore, in the meantime, the first pressure regulating valve 38 and the third shift valves 37 are communicated with each other due to a connection of the pressure oil lines L24 with L25.

On the other hand, when a spool S2 is moved for being in a right side position, pressure oil is supplied to the second shift valve 36 due to a connection of the pressure oil lines L11 with L21.

And at the same time, a state of communicating the second pressure regulating valve 39 with the second shift valve 36 can be varied due to a communication of the pressure oil lines L22 with L23. In the meantime, a state of communicating the first pressure regulating valve 38 with the third shift valve 37 can be also varied due to a communication of the pressure oil lines L25 and L26. Hereupon, pressure oil decompressed by a modulator valve 41 is supplied to a left side of a spool S2 of the first shift valve 35 from a pressure oil line L27 through a pressure oil line L6 divided from a pressure line L1 directly connected with a pressure oil pump 33. In the meantime, a spring B2 is inserted into a right side of the spool S2 to energize the spool S2 to a left side. What is more, pressure oil decompressed by dividing from a modulator valve 41 can be supplied to a light side of the spool S2 from a pressure oil line L28 through the first solenoid valve 42.

The first solenoid valve 42 is to carry out ON and OFF actuation by receiving a control signal from ECU. When a valve is OFF, a spool 2 is moved to a left side by pressure oil from a pressure oil line L28 and a drag of spring B2 since decompressed pressure oil is supplied to the right side of a spool S2. In the meantime, when the solenoid valve 42 is ON, a spool S2 is moved to a right side since pressure oil in right side of a spool S2 is discharged into an oil pan 31 from a exhaust port Lx.

In the second shift valve 36, when a spool S3 is in right side position indicating in drawing, a pressure oil line L23a divided from a pressure oil line L23a and a pressure oil line L35 are connected with each other and a pressure oil line L21 and a pressure oil line L36 are connected with each other.

Besides, since a pressure oil line L32 and a pressure oil line L33 are connected with each other, pressure oil can be supplied and discharged to the clutch CL2.

Also, when a spool S3 is moved to left side position, a pressure oil line L31 and a pressure oil line L34 are connected, a pressure oil line L23b as divided line of a pressure oil line L23 and a pressure oil line L36 are connected, and a pressure oil line L21 and a pressure oil line L35 are connected respectively.

The second solenoid valve 43 is to supply pressure oil throttled by a throttle 43a when a valve is ON from a pressure oil line L37 to a spool S3 of the second shift valve 36 for moving a spool S3 to left side against a drag of a spring B3.

And when a valve is OFF, pressure oil supplying to the second shift valve 36 is discharged from an exhaust oil port Lx of the second solenoid valve 43 through a pressure oil line L37. This allows the spool S3 to be moved toward right side by energizing with a spring B3.

When a spool S4 is in right position as indicating in a drawing, in the third shift valve 37, a pressure oil line L32 and a pressure oil line L 26 are connected with each other.

Pressure oil can be supplied and discharged to the clutch CL1 from the third shift valve 37 due to a connection a pressure oil line L35 with a pressure oil line L37.

On the other hand, when a spool S4 is moved to left side, a pressure oil line L 32 and a pressure oil line L 24 are connected with each other and a pressure oil line L34 and a pressure oil line L26 are connected with each other respectively.

What is more, pressure oil can be supplied and discharged to the clutch CL3 due to a connection a pressure oil line L36 with a pressure oil line L38.

The third shift valve 37 is capable of two way moving toward both right and lift side positions deponing on a magnitude of force acting upon a spool S4 by decompressed oil pressure supplied from a pressure oil line L39 to a right side of the spool S4 through an actuation of the third solenoid valve 44, a spring B4 placed on a left side of the spool S4 and pressure oil supplied from a oil pressure line L2.

Besides, the third solenoid valve 44 has the same mechanism as that of the first solenoid valve 42 for omitting explanation. The fourth shift valve 38 is a switching valve to supply and discharge pressure oil to the clutch CL4 by connecting a pressure oil line L31 with a pressure oil L41 when a spool S5 is moved to left side position from right side position indicating in a drawing.

In the fourth shift valve 38, since pressure oil is gradually supplied to a right side of a spool S5 when a second linear solenoid valve 45 is ON, a spool S5 is moved to a left side position against a drag of a spring B5 and pressure oil supplied from a pressure oil line L2. What is more, at this moment, since pressure oil is supplied from a pressure oil line L5, the spool S5 can be maintained on left side position even after the second linear solenoid valve 45 is OFF.

The first pressure regulating valve 39 is to move a spool S6 from a right side position to a left side position in a drawing by ON-OFF actuation of the first linear solenoid valve 45. It is possible to connect a pressure oil line L25 connected with the first shift valve 35 with a discharge port Lx and to switch a connection for a pressure oil line L12 divided from a pressure oil line L11.

Besides, using the first linear solenoid valve 45 allows a movement of a spool S6 to be gradual and smooth.

Similarly, the second pressure regulating valve 40 is to move a spool S6 from a right side position to a lift side position in a drawing by ON-OFF actuation of the second linear solenoid valve 45. It is possible to connect a pressure oil line L22 connected with the first shift valve 35 with a discharge port Lx and to switch a connection for a pressure oil line L13 divided from a pressure oil line L11.

Besides, a hydraulic control device 6 is equipped with a shift valve and a solenoid valve (not shown) to intermit a lockup clutch 12 of a fluid torque converter 11 in Fig.1. Also, when a select bar is moved to "R" as backward position, a gear train 20 for backward in Fig.1 is selected by a servo valve (not shown).

Also, a clutch as publicized mechanism engaged by supplying pressure oil to transmit a rotation of each shaft 13, 15, 17 to other shaft 13, 15, 17 are mounted as each clutch CL1-CL4. Hereupon, an accumulator ACC to gradually supply pressure oil to the clutch CL1-CL4 is provided on each pressure oil lines L33, L37, L38 and L41 supplying pressure oil to the clutches CL1-CL4.

Moreover, a pressure switch 47 to confirm a pressure of pressure oil supplying to clutch CL2 and CL3 by outputting ON signal when pressure of pressure oil reached a given level is provided on the clutch CL2 and CL3 respectively.

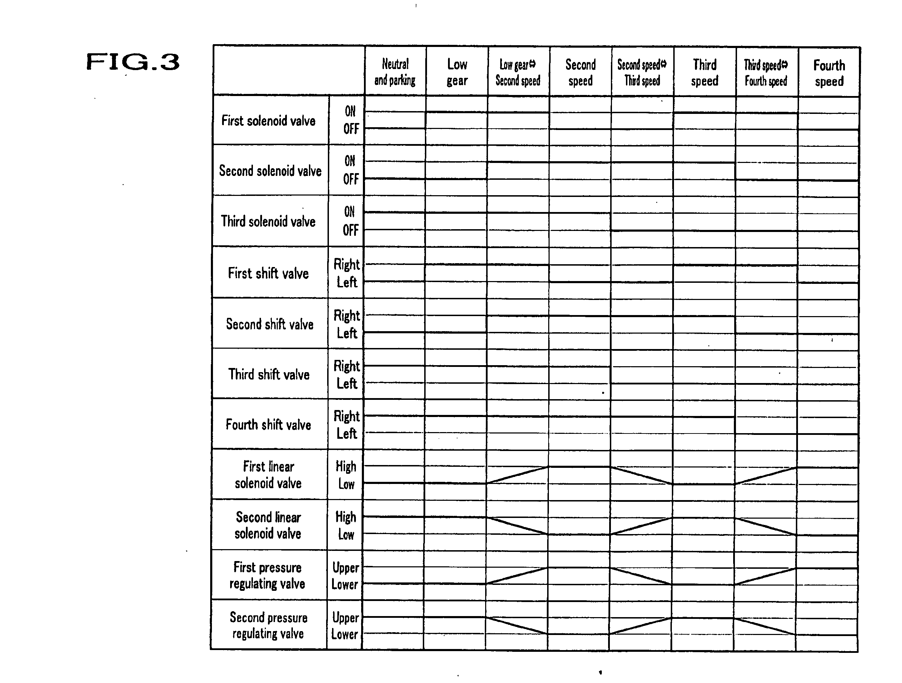

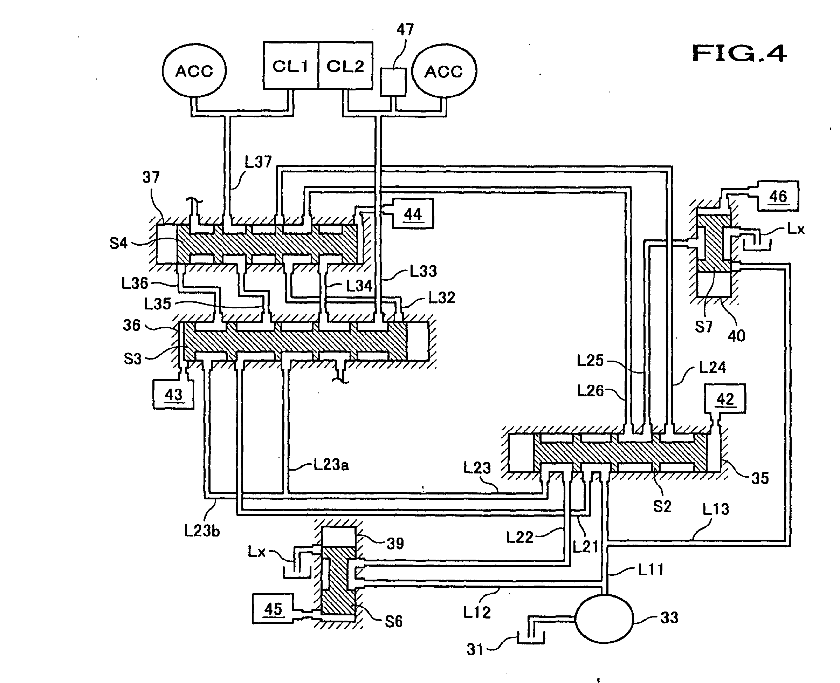

A shifting up of each speed stage from low gear to fourth speed by using the hydraulic control apparatus 6 will be described with reference to a sequence diagram in Fig.3 and Fig.4-10 typically indicating a hydraulic circuit of Fig.2. Besides, in Fig.4-10, a spool S6 of the first pressure regulating valve 39 and a spool S7 of the second pressure regulating valve 40 is moved up and down, in the meantime, a sequence diagram of Fig.3 is also indicating up and down in accordance to this.

First of all, as indicating in Fig.4, when a hybrid vehicle is running in low gear, pressure oil is supplied to only clutch CL1. In this case, pressure oil introduced into the first shaft valve 35 from a hydraulic pump 33 via a pressure oil line L11 is supplied to the clutch CL 1 via a pressure line L37 from the second shift valve 36 via a pressure oil line L21 and the third shift valve 37 via a pressure oil L35.

Next, in case of shifting up from low gear to second speed, as indicating in Fig.3, the second solenoid valve 43 is switched from OFF to ON, in the meantime, the second linear solenoid valve45 and 46 are smoothly actuated for discharging pressure oil from the clutch CL1 and supplying pressure oil to the clutch CL2 in return to form a second speed stage.

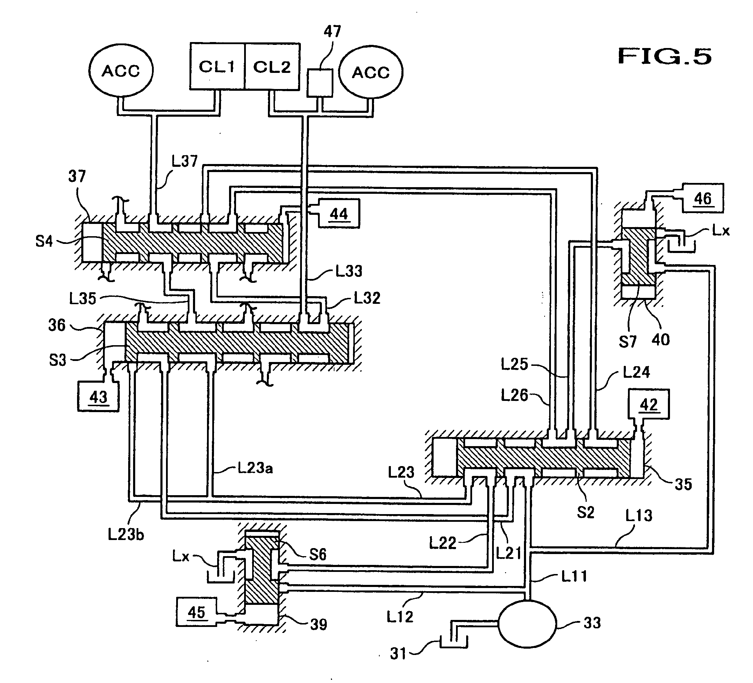

In this case, as indicating in Fig.5, the spool S3 of the second shift valve 36 is moved to a right side position by setting the second solenoid valve 43 to ON. This allows a pressure oil line L23a to be connected with a pressure oil line L35. On the other hand, since the spool S6 of the first pressure regulating valve 39 is moved to upper position, pressure oil supplied into the clutch CL1 is discharged from a waste oil port Lx of the first pressure regulating valve 39 via a pressure oil line L22 from the second shift valve 36 via a pressure oil line L35 and the first shift valve 35 via a pressure oil line L23a (a pressure oil line L23).

At the same time, a spool S7 of the second pressure regulating valve 46 is downed to lower position while a pressure oil line L 32 and a pressure oil line L 33 are connected with each other in the second shift valve 36.

Accordingly, pressure oil is supplied to the clutch CL2 from the second pressure regulating valve 40 via a pressure oil line L13 divided from a pressure oil L11 of an oil pump 33, the first shift valve 35 via an oil pressure line L25, the third shift valve 37 via a pressure oil line L26, the second shift valve 36 via a pressure oil line L32 and a pressure oil line L33.

Besides, as describing before, pressure oil is never suddenly supplied to the clutch CL2 since the spool S7 of the second pressure-regulating valve 40 is gradually moving down.

Consequently, a shift shock never is occurred when the clutch CL2 is engaged.

And after shifting up to second speed is completed, as indicating in Fig.3, the spool S2 of the first shift valve 35 is moved to a left side position by switching the first solenoid valve 42 from ON to OFF.

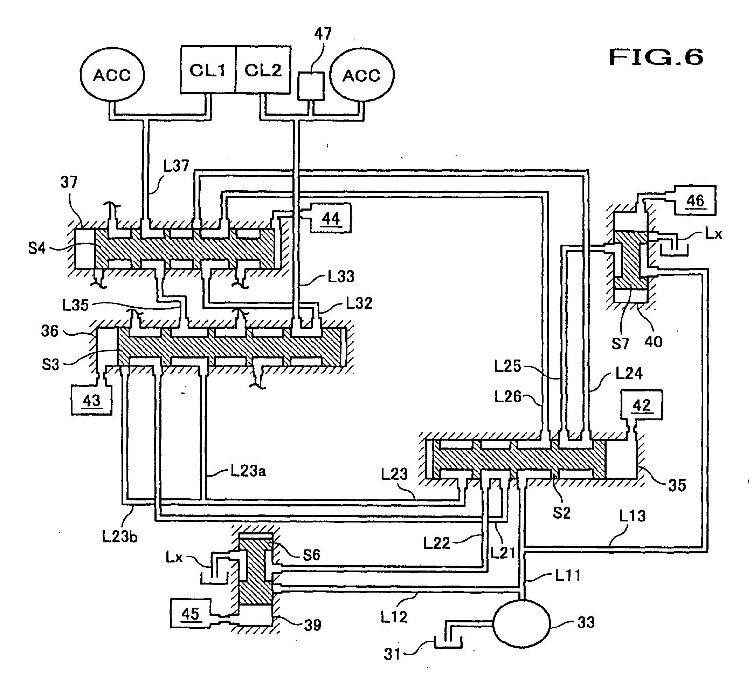

As indicating in Fig.6, since the pressure oil line L11 and the pressure oil line L26 are connected with each other through the first shift valve 35, a following process is to maintain pressure oil of the clutch CL2 through these roots of pressure oil. Besides, oil pressure applying to the clutch CL2 is increased by switching the first solenoid valve 42, however, a shift shock attributed to oil pressure rise is never occurred since after the clutch CL2 is engaged.

Moreover, in case of shifting up from second speed to third speed, as indicated in Fig.3, the third solenoid valve 44 is switched from ON to OFF, at the same time, the first linear solenoid valve 45 is lineally moved to a lower position and the second leaner solenoid valve 46 is lineally moved to a higher position respectively for drawing pressure oil from the clutch CL2 and supplying pressure oil to the clutch CL3 in return to form third speed stage.

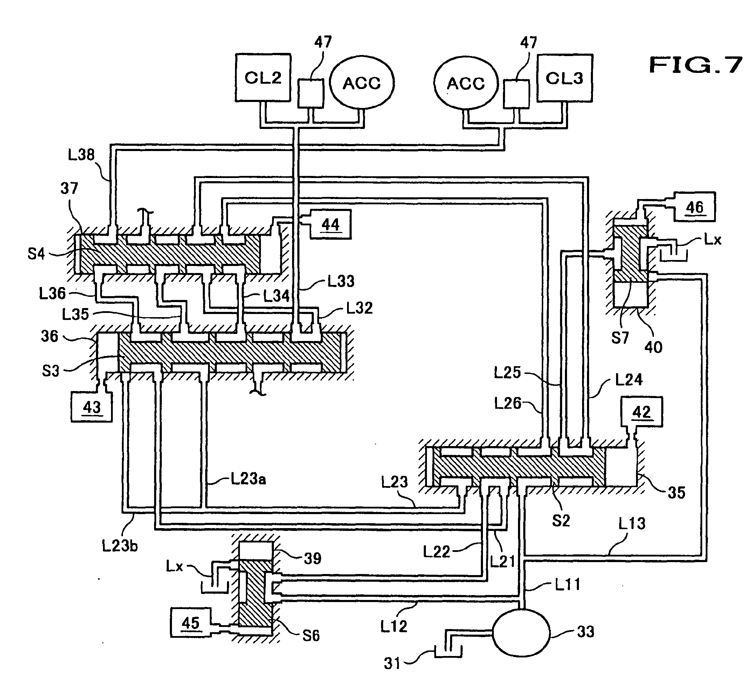

In this case, as indicated in Fig.7, a pressure oil line L32 and a pressure oil line L24 are connected with each other since the spool S4 of the third shift valve 37 is moved to left side.

In the meantime, the spool S7 of the second pressure regulating valve 40 is gradually moved upward. Accordingly, pressure oil supplied to the clutch CL2 is flowed to a pressure oil line L24 from the pressure line L32 via the second shift valve 36, the oil pressure line L24 and the third shift valve 37, moreover, this pressure oil is discharged from a exhaust oil port Lx of the second pressure regulating valve 40 via the first shift valve 35 and the pressure oil line L25.

At this moment, the spool S6 of the first pressure regulating valve 39 is downed to a lower position while the pressure oil line L36 of the third shift valve 37 and the pressure oil line L38 are connected with each other. This allows pressure oil to be supplied to the pressure oil line L22 from the pressure oil line L12 divided from the pressure oil line L11 of the hydraulic pump 33 via the first pressure regulating valve 39. What is more, pressure oil supplied to the pressure oil line L22 is supplied to the clutch CL3 from the pressure oil line L38 through the first shift valve 35, a pressure oil line L21, the first shift valve 36, a pressure oil line L36, the third shift valve 37.

In this case, the actuation of the first linear solenoid valve 45 can prevent a shift shock from occurring when the clutch CL3 is engaged.

And when shifting up to a third speed is completed, the first solenoid valve 42 is switched from OFF to ON for moving the spool S2 of the first shift valve 35 to right side position.

Since this allows the pressure oil line L11 and the pressure oil line L21 to be connected with each other through the first shift valve 35, a following process is to maintain pressure oil of the clutch CL3 by these roots of pressure oil. Besides, oil pressure applying to the clutch CL3 is increased by switching the first solenoid valve 42, however, a shift shock attributed to oil pressure rise is never occurred since after the clutch CL3 is engaged.

Moreover, in case of shifting up from third speed to fourth speed, the solenoid valve 43 is switched from ON to OFF, at the same time, the first linear solenoid valve 45 is linearly moved to higher position and the second linear solenoid valve 46 is linearly moved to lower position for discharging pressure oil from the clutch CL3 and supplying pressure oil to the clutch CL4 in return to form four speed stage.

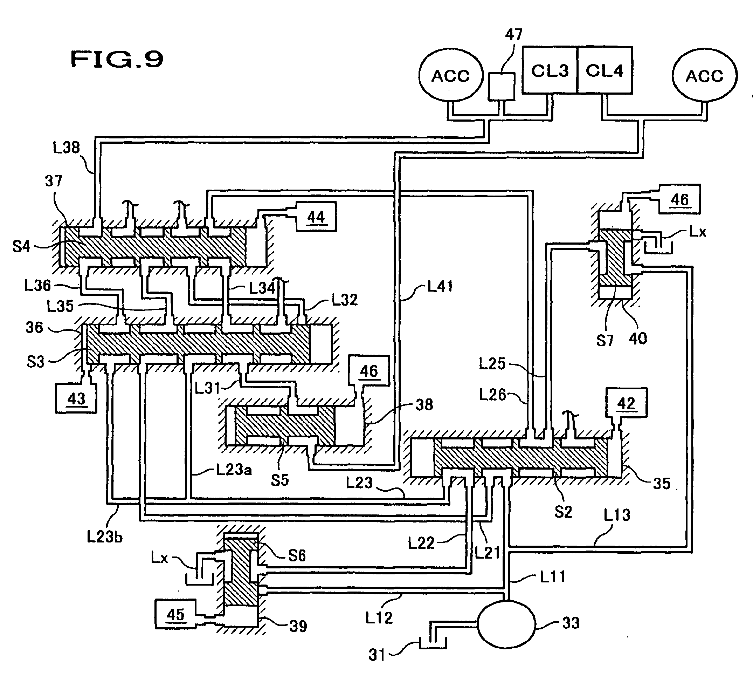

In this case, as indicated in Fig.9, a pressure oil line L23b is connected with a pressure oil line L36 and a pressure oil line L31 is connected with a pressure oil line L34 since the spool S3 of the second shift valve 36 is moved to left side. Furthermore, the spool S6 of the first pressure regulating valve 39 is gradually moved to upper position. Accordingly, pressure oil supplied to the clutch CL3 is discharged from an exhaust oil port Lx of the first pressure regulating valve 39 through the pressure oil line L38, the third shift valve 37, the pressure oil line L36, the second shift valve 36, the pressure oil line L23b (pressure oil line L23), the first shift valve 35, and the pressure oil line L22.

At the same time, the spool S5 of the fourth shift valve 38 is moved to left side position while the spool S7 of the second pressure regulating valve 40 is moved to lower position.

This allows pressure oil to be supplied to the pressure oil line L25 from the pressure oil line L13 via the second pressure regulating valve 40, moreover, pressure oil is flowed by passing through the pressure oil line L26, the first shift valve 35, the third shift valve 37, the pressure oil line L34, the first shift valve 36, the pressure oil line L31 to be gradually supplied to the clutch CL4 from the pressure oil line L41 via the fourth shift valve 38.

And when shifting up to fourth speed is completed, the first solenoid valve 42 is switched from ON to OFF for moving the spool S2 of the first shift valve 35 to left side position.

Since this allows the pressure oil line L11 and the pressure oil line L26 to be connected with each other through the first shift valve 35, a following process is to maintain pressure oil of the clutch CL4 by these roots of pressure oil. Besides, oil pressure applying to the clutch CL4 is increased by switching the first solenoid valve 42, however, a shift shock attributed to oil pressure rise is never occurred since after the clutch CL4 is engaged.

Next, a normal mode carrying out shifting down from each speed stage without regenerative braking will be described.

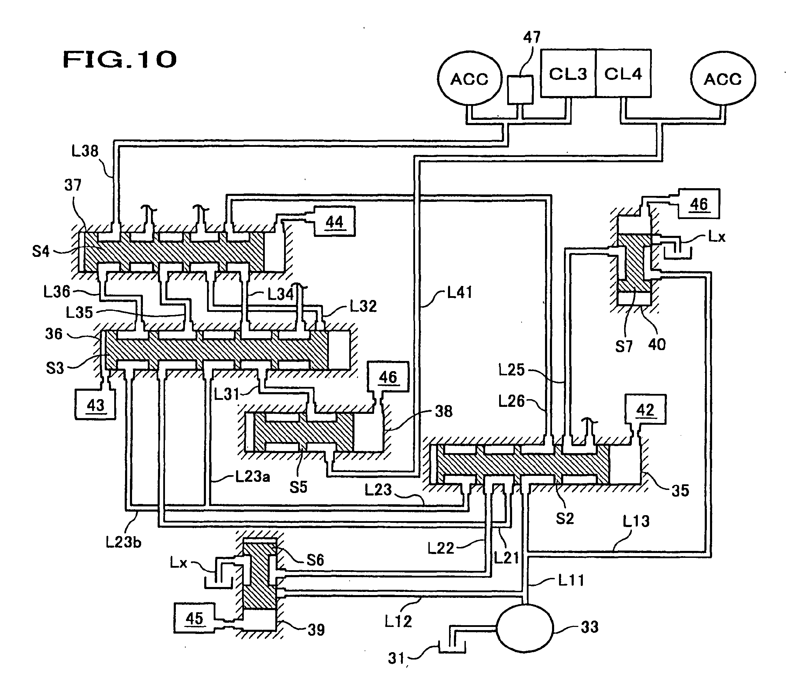

First of all, in case of shifting down from fourth speed to third speed, the first linear solenoid valve 42 is switched from OFF to ON from the state maintaining a fourth speed stage as indicating in Fig.10, at the same time, the first linear solenoid valve 45 is linearly moved to a lower position and the second linear solenoid valve 46 is linearly moved to a higher position Since this allows the spool S7 of the second pressure regulating valve 40 to be moved from lower position to upper position indicating in Fig.9, a connecting point with a pressure oil line L25 is switched to an exhaust oil port Lx from the pressure oil line L 13. Therefore, pressure oil supplied to the clutch CL4 is discharged from an exhaust oil port Lx. On the other hand, since the spool S6 of the first pressure regulating valve 39 is moved to lower position from upper position of Fig.9, a connecting point with a pressure oil line L22 is switched to a pressure oil line L12 from a discharge oil port Lx. Consequently, pressure oil from a hydraulic pump 33 is supplied to the clutch CL3.

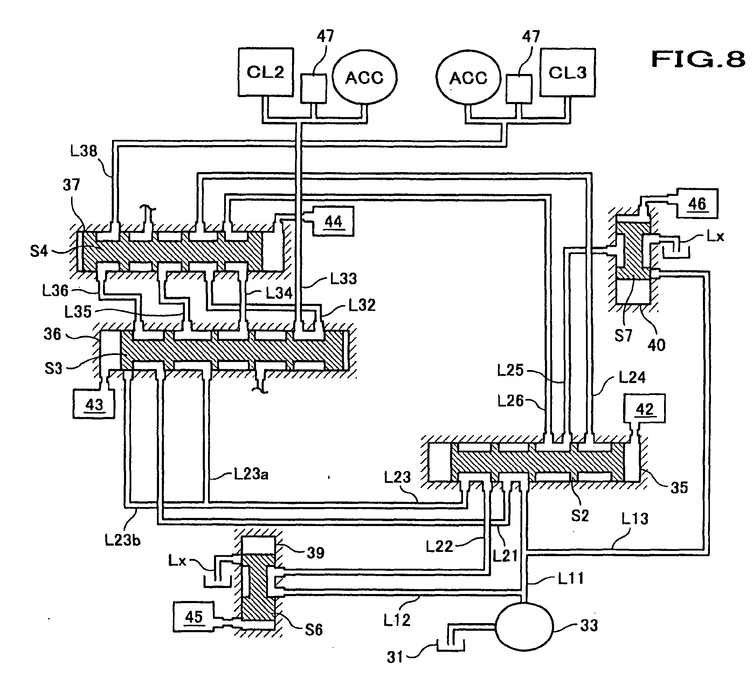

And when shifting down is completed, the second solenoid valve 36 is switched to ON from OFF to form a hydraulic circuit indicating in Fig.8.

Moreover, in case of shifting down from third speed to second speed, the first solenoid valve 42 is switched to OFF from ON under the condition that pressure oil is supplied to the clutch CL3 indicating in Fig.8, at the same time, the first linear solenoid valve 45 is lineally moved to a higher position side and the second linear solenoid valve 46 is lineally moved to a lower position. Since this allows the spool S6 of the first pressure regulating valve 39 to be moved from a lower position to upper position in Fig.7, a connecting point with the pressure oil line L22 is switched to a discharge port Lx from a pressure oil line L12 for discharging pressure oil supplied into the clutch CL3.

On the other hand, since a spool S7 of the second pressure regulating valve 40 is moved from upper position to lower position indicating in Fig.7, connecting point of the pressure oil line L25 is switched to the pressure oil line L13 from the discharge port Lx for supplying pressure oil from a oil pump 33 to the clutch CL2.

And when shifting down is completed, the third solenoid valve 37 is switched to ON from OFF to form a hydraulic circuit indicating in Fig.6.

And in case of shifting down from a second speed to a low gear, the first solenoid valve 42 is switched to ON from OFF under the condition that pressure oil is supplied to the clutch CL3 indicating in Fig.6, at the same time, the first linear solenoid valve 45 is lineally moved to lower position and the second linear solenoid valve 46 is lineally moved to higher position.

Since this allows a spool S7 of the second pressure regulating valve 40 to be moved from lower position to upper position in Fig. 5, connecting point of the pressure oil line L25 is switched to discharge port Lx from the pressure oil line L13 for discharging pressure oil supplied to the clutch CL2.

On the other hand, since a spool S6 of the second pressure regulating valve 39 is moved to lower position from upper position indicating in Fig.5,
Connecting point of the pressure oil line L22 is switched to the pressure oil line L12 from the discharge port Lx for supplying pressure oil from the oil pressure pomp 33 to the clutch CL1. And when shifting down is completed, the second solenoid valve 36 is switched from ON to OFF to form a hydraulic circuit indicating in Fig.4.

In a switching transition of shifting up with shifting down in this way, switching a supply of pressure oil from pressure oil pump 33 with a discharge port Lx by switching the first pressure regulating valve 39 with the second pressure regulating valve 40 can easily control a supply and discharge of pressure oil to each clutch CL1-CL4.

Moreover, since switching the first pressure regulating valve 39 with the second pressure regulating valve 40 is carried out by a linear movement of the first linear solenoid valve 45 and the second linear solenoid valve 46, a shift shock caused by engaging each clutch CL1-CL4 due to sudden supplying pressure oil can be prevented.

Next, carrying out a regenerative braking by the hydraulic control device 6 with a pressure regulating valve mode when a hybrid vehicle is braking will be described.

Besides, a pressure regulating valve mode is a mode to provide the condition that pressure oil is not supplied to any clutch CL1-CL4 by controlling the first pressure regulating valve 39 and the second pressure regulating valve 40 by the first linear solenoid valve 45 and the second linear solenoid valve 46 when carrying out a regenerative braking. Using a pressure regulating mode can collect a decelerate energy of a hybrid vehicle from a motor 8 as an electric energy without consumption caused by a drag resistance of an engine since a rotation of output shaft 4 shown in Fig.1 can not be transmitted to a primary shaft 13.

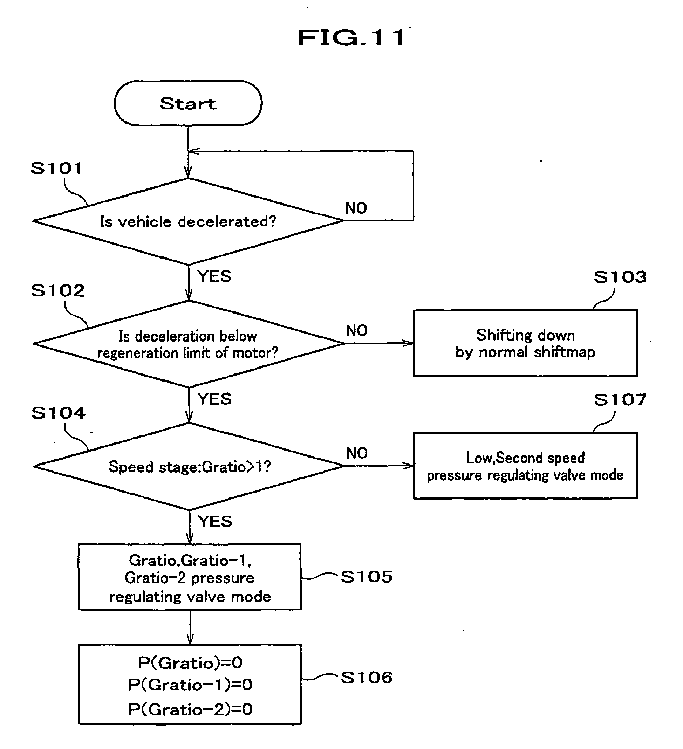

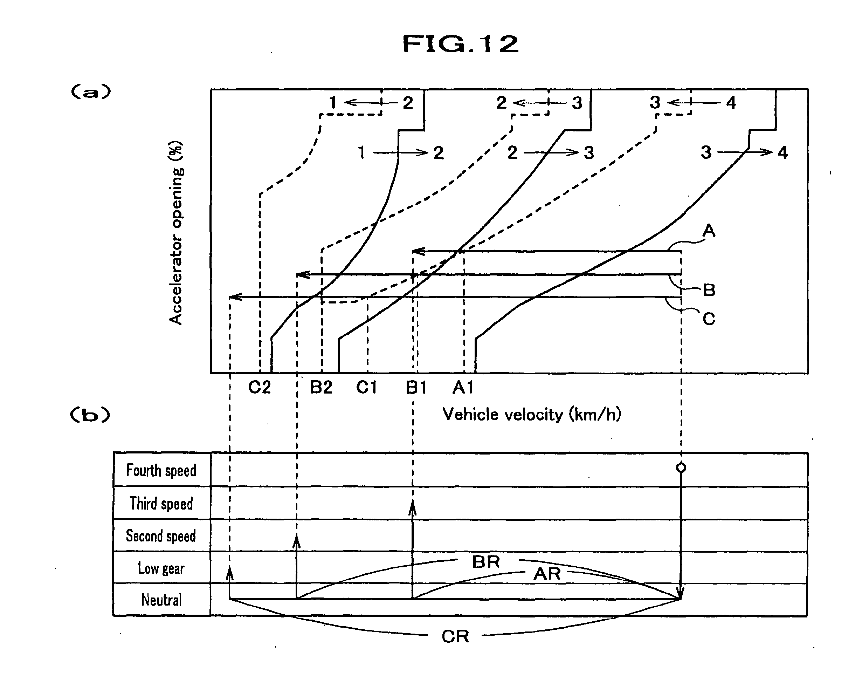

A regenerative braking by a pressure regulating valve mode is carried out in accordance with a flow chart in Fig.11, ECU judges a running condition of a hybrid vehicle as initial judgement through an acceleration sensor in a step S101. Hereupon, when ECU judged that hybrid vehicle is decelerated, then it judges in a step 102 whether a regeneration of battery via a motor is necessary or not. Next in case of beyond regenerative limitation, it moves to a step S 103 to carry out a shifting down with normal mode in accordance with a map indicating a relation ship between accelerator opening and a vehicle speed shown in Fig.12 (a).

Hereupon, full lines in Fig.12 (a) indicate a relation between an accelerator opening and a vehicle speed when carrying out a shift change to a higher speed stage from each speed stage. (For example, a full line 1 → 2 shows a shifting up from low gear to a second speed). On the other hand, dashed lines indicate a relation between an accelerator opening and a vehicle speed when carrying out a shift change to a lower speed stage from each speed stage. (For example, a dashed line 2 → 1 shows a shifting down from second speed to low gear) . Accordingly, in case of carrying out a shifting down from four speed to third speed, as indicating an arrow mark A of Fig.12 (a), when a vehicle speed is reached at a predetermined velocity A1 after decelerating, a hydraulic control apparatus 6 discharges pressure oil supplied to the clutch CL4 and gradually supplies pressure oil to the clutch CL3 in turn.

Furthermore, a deceleration from fourth speed to second speed indicating as an arrow mark B shows a shifting down to a third speed at a predetermined velocity B1 and then a shifting down to a second speed at the predetermined speed B2. And a deceleration from fourth speed to low gear indicating as an arrow mark C shows a shifting down to third speed at a predetermined velocity C1, second speed at a predetermined velocity B2, and low gear at a predetermined velocity C2 respectively.

In the meantime, in case of carrying out a regenerative braking for charging to a battery, it moves to a step S104. Hereupon, ECU confirms whether a speed stage in decelerating (the first speed stage: G ratio) is larger than 1, namely, it is a deceleration from 2∼4 speed. In this case, it is set to a pressure regulating valve mode (step S105) by that speed stage (a first speed stage; G ratio) and a lower than that of speed stage (a second speed stage; G ratio-1).

For example, in the case where deceleration is carried out by a pressure regulating valve mode from fourth speed (G ratio=4) to third speed (G ratio-1=3) indicating as an arrow mark A in Fig. 12 (a) , a neutral state is formed by a pressure regulating valve mode of third speed and fourth speed as indicating in Fig.12 (b). And when a vehicle speed is decreased to a predetermined value, pressure oil is supplied to the clutch CL3 from a neutral state to engage the clutch CL3 and form third speed. In this case, in the area AR of Fig.12(b), a motor 8 carries out a regenerative braking for discharging regenerative energy into a battery under the condition that a drag resistance of an engine 1 is no existence. The neutral state (step S106) by this pressure regulating valve mode is formed as following way. Besides, "P (G ratio)= 0" in the step S106 indicates the states that pressure oil is not applied to a clutch forming a speed stage G ratio.

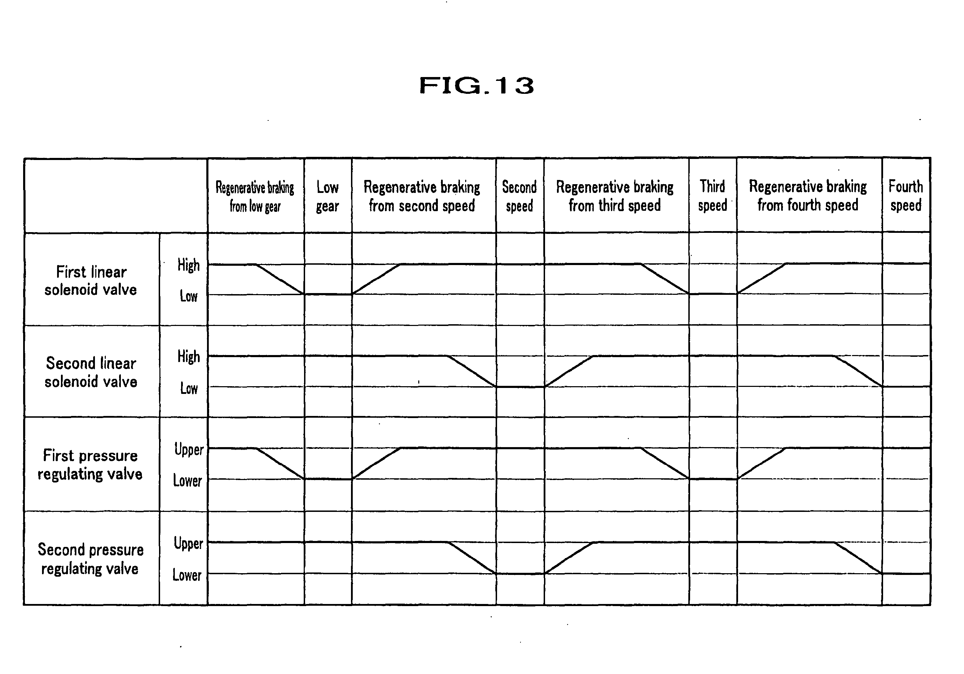

In case of carrying out a shifting down from fourth speed to third speed in the pressure regulating valve mode, a first linear solenoid valve 45 and a second solenoid valve 46 actuate so as to form a time zone maintaining both a first pressure regulating valve 39 and a second pressure regulating valve 40 on upper position as indicating in a sequencer diagram of Fig.13. This allows pressure oil supplied to the clutch CL3 of Fig.9 to be discharged from a discharge port Lx of the first pressure regulating valve 39 via a pressure oil line L22 (P (3)=0), and also allows pressure oil supplied into the clutch CL4 to be discharged from a discharge port Lx of the second pressure regulating valve 40 via a pressure oil line L25 (P (4)=0).

And in case of deceleration from a forth speed (G ratio=4) to second speed (G ration-2=2) indicating as an arrow mark B of Fig.12 (a) , pressure oil is once supplied to the clutch CL3 from a neutral state for switching to the clutch CL after carrying out a regenerative braking in a zone BR as it is the pressure regulating valve mode of third speed and forth speed (P (4), P (3), P (2) are all 0).

A reason of engaging with the CL2 after CL3 is to prevent occurring a shift shock when engaging with the clutch CL2 or what is so called a surge caused by blowing up of an engine 1 due to being a big difference between a respective rotation speed of an engine 1 and a driving shaft.

And in case of deceleration from a fourth speed to a low gear indicating as an arrow mark C of Fig.12 (a), in the area CR, the clutch CL3 is engaged from a neutral state for engaging the clutch CL1 after carrying out a regenerative braking as it is the pressure regulating valve mode of third speed and forth speed.

Hereupon, the reason why the engagement of the clutch CL3 is included is as said mention, and there is a case that the clutch CL2 is engaged in case of necessary.

In case of carrying out a shifting down from third speed to second speed in a pressure regulating valve mode, together with a case of shifting down from second speed to a low gear, the first linear solenoid valve 45 and the second linear solenoid valve 46 actuate so as to form a time zone maintaining the first pressure regulating valve 39 and the second pressure regulating valve 40 on the upper position as indicating in the sequence diagram of Fig.13. This allows pressure oil supplied to the clutch CL1 or the clutch CL3 of Fig.5, Fig.7 to be discharged from a discharge port Lx of the first regulating valve 39 via the pressure oil line L 22, and also allows pressure oil supplied to the clutch CL2 to be discharged from a discharge port Lx of the second regulating valve 40 from the pressure oil line L25.

And a speed stage is 1, namely, low gear, in case of carrying out regenerative braking from this low gear in the step S104, it moves to the step S 107 for carrying out regenerative braking in the pressure regulating valve mode of low gear and second speed by a sequencer control indicating in Fig.13.

According to the present embodiment, rapidly discharging or moderately supplying pressure oil supplied to two clutches selected through the clutch CL1-CL4 allows regenerative energy in regenerative braking to be maximally collected through controlling the first linear solenoid valve 45 and the second linear solenoid valve 46 when carrying out regenerative braking. Besides, the reason why pressure oil is not supplied to or discharged from a clutch except for selected one is the same reason as the normal mode.

Besides, the present invention is not restricted to the embodiment but is widely applicable. For example, it can be arranged so as to start engine 1 by a starter, which is provided instead of a motor 2 shown in Fig.2 and is not directly contributed to a rotation of a clank shaft 3.

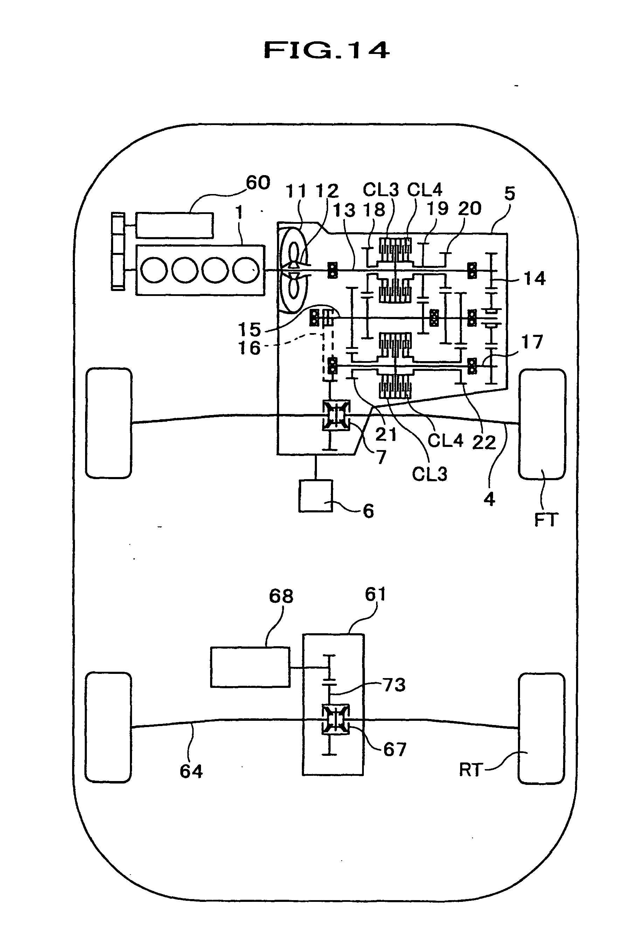

And as indicating in Fig.14, it can be arranged such that a front wheel FT is driven by an engine 1 started by a starter 60 and a rear wheel RT is driven by a motor unit 61.

A motor unit 61 has a motor 68 connected with an out put shaft 64 of a rear wheel RT through a differential gear 67 and a final gear 73 so that regenerative energy is accumulated to a battery (not shown) from the motor 68 when regenerative braking is carried out.

This hybrid vehicle is capable of improving a fuel efficiency and reducing gas emission by switching to a front wheel drive by only engine 1, a rear wheel drive by only motor 68, and a four wheel drive by both an engine 1 and a motor 68 in accordance with a road condition and a vehicle speed and so on. Hereupon, this hybrid vehicle can obtain the equal effects even if a motor 2 in Fig.2 is used instead of a starter 60.

What is more, it is also available that a transmission 5 shown in Fig.1 and Fig.14 can be a five speed stage transmission. In this case, though a new pressure oil line, a shift valve and a pressure regulating valve are needed to provide on the apparatus in Fig.2 to appropriately supply pressure oil to five clutches CL1∼CL5, at the same time, a solenoid valve and a liner solenoid valve are needed to provide for controlling these one, it can be obtained the equal effects as a case of four speed transmission 5 by controlling pressure oil supplying to and discharging from two or three clutches selected
out of each clutch CL1∼CL5 through controlling an actuation of pressure regulating valve by a linear solenoid valve in the same way of said pressure regulating valve mode when regenerative breaking is carried out.

Also, the control device of this transmission can be applicable for the case where a hybrid vehicle has automatic MT (manual transmission). In this case, a main clutch or drug clutch is power intermitted means. What is more, the control device of this transmission can be applicable for the control device of a transmission taken an optional means such as electric or mechanical system as long as it has a mechanism capable of switching a plurality of power intermitted means.

According to the present invention, eliminating a loss caused by resistance of a pull sliding of engine and improving collecting efficiency of regenerative energy by a motor can be practical with a simple structure for a control device of a transmission of a hybrid vehicle equipped with an engine and a motor because it is arranged such that a respective rotation of an engine and a wheel in a transmission can be cut off perfectly through cutting off a power intermitting means by a controlling means when a motor is regenerated.

Furthermore, acceleration can be smoothly carried out again since appropriate speed stage can be rapidly formed even when a driver accelerates again after regenerative braking is carried out due to a structure such that a control device of a transmission is waiting under the condition capable of forming a lower speed stage (a second speed stage) rather than a speed stage just before regeneration (a first speed stage).

## Claims

1. A control device of transmission for a hybrid vehicle comprising:
an engine (1);
a motor (8) provided as capable of transmitting a power to wheels (T) apart from said engine (1); and
a transmission (5) provided between said engine (1) and wheels (T) to have at least one power intermittent device (CL1-CL4), wherein said control device of transmission is arranged so as to have a controller (6) for controlling an intermittent of said power intermittent device (CL1-CL4) in accordance with a driving condition and to control said controller (6) to intermit said power intermittent device (CL1-CL4) when regenerating said motor (8), and wherein
said transmission (5) is one to form a plurality of speed stages by disengaging a plurality of friction elements (CL1-CL4),
**characterized in that** said transmission (5) is arranged so as to be capable of selecting a first friction element (CL2, CL3, CL4) forming a speed stage just before regenerating said motor (8) and a second friction element (CL1, CL2, CL3) capable of forming a lower speed stage than said first friction element (CL2, CL3, CL4) when regenerating said motor (8), to prepare said first and second friction element (CL1-CL4) under the condition capable of engaging while narrowing an idle part of an actuator stroke of an actuator (34, 35, 36, 37, 38, 39, 40) for shifting when regenerating said motor (8).

2. A control device of transmission for a hybrid vehicle according to claim 1,
**characterized in that** when said transmission (5) decelerates from a first speed stage to a second speed stage lower than the first speed stage by two speed stages while regenerating said motor (8), the deceleration is performed through speed stages between the first and second speed stages.

## Patentansprüche

1. Steuer/Regelvorrichtung eines Getriebes für ein Hybridfahrzeug, umfassend:
eine Maschine (1);
einen Motor (8), welcher derart bereitgestellt ist, dass er in der Lage ist, abgesehen von der Maschine (1) eine Kraft auf Räder (T) zu übertragen; und
ein Getriebe (5), welches zwischen der Maschine (1) und Rädern (T) vorgesehen ist, sodass es wenigstens eine Kraftunterbrechungsvorrichtung (CL1-CL4) aufweist, wobei die Steuer/Regelvorrichtung des Getriebes so eingerichtet ist, dass sie eine Steuer/Regeleinrichtung (6) aufweist, um eine Unterbrechung der Kraftunterbrechungsvorrichtung (CL1-CL4) nach Maßgabe eines Fahrzustands zu steuern/zu regeln, und die Steuer/Regeleinrichtung (6) so zu steuern/zu regeln, dass sie die Kraftunterbrechungsvorrichtung (CL1-CL4) unterbricht, wenn der Motor (8) regeneriert, und wobei
das Getriebe (5) ein Getriebe ist, welches eine Mehrzahl von Schaltstufen einrichtet, indem es einen Eingriff einer Mehrzahl von Reibelementen (CL1-CL4) löst,
**dadurch gekennzeichnet, dass** das Getriebe (5) so eingerichtet ist, dass es in der Lage ist, ein erstes Reibelement (CL2, CL3, CL4) auszuwählen, welches eine Schaltstufe kurz vor der Regenerierung des Motors (8) einrichtet, und ein zweites Reibelement (CL1, CL2, CL3) auszuwählen, welches in der Lage ist, eine niedrigere Schaltstufe einzurichten als das erste Reibelement (CL2, CL3, CL4), wenn der Motor (8) regeneriert, sodass das erste und das zweite Reibelement (CL1-CL4) in einem zum Eingriff fähigen Zustand vorbereitet werden, wobei ein Leerlaufabschnitt eines Aktuatorhubs eines Aktuators (34, 35, 36, 37, 38, 39, 40) zum Schalten schmaler eingestellt wird, wenn der Motor (8) regeneriert.

2. Steuer/Regelvorrichtung eines Getriebes für ein Hybridfahrzeug nach Anspruch 1,
**dadurch gekennzeichnet, dass** dann, wenn das Getriebe (5) von einer ersten Schaltstufe zu einer zweiten Schaltstufe, welche um zwei Schaltstufen kleiner ist als die erste Schaltstufe, verzögert, während der Motor (8) regeneriert, die Verzögerung über Schaltstufen ausgeführt wird, die zwischen der ersten und der zweiten Schaltstufe liegen.

## Revendications

1. Dispositif de commande de transmission pour véhicule hybride comprenant :
- un moteur à combustion interne (1) ;
- un moteur électrique (8) fourni de manière à être capable de transmettre une puissance motrice à des roues (T) indépendamment dudit moteur à combustion interne (1) ; et
- une transmission (5) placée entre ledit moteur à combustion interne (1) et les roues (T) de manière à comporter au moins un dispositif de puissance motrice intermittente (CL1 - CL4), dans laquelle ledit dispositif de commande de transmission est aménagé de manière à comporter une unité de commande (6) destinée à commander une puissance intermittente dudit dispositif de puissance motrice intermittente (CL1 - CL4) en fonction d'une condition de conduite et de commander ladite unité de commande (6) afin qu'il actionne par intermittence ledit dispositif de puissance motrice intermittente (CL1 - CL4) lors d'une récupération dudit moteur électrique (8), et dans lequel :
- ladite transmission (5) est une transmission destinée à former une pluralité de rapports de vitesse par désengagement d'une pluralité d'éléments à friction (CL1 - CL4),
**caractérisé en ce que** ladite transmission (5) est aménagée de manière à être capable de sélectionner un premier élément à friction (CL2, CL3, CL4) qui forme un rapport de vitesse juste avant une récupération dudit moteur électrique (8) et un second élément à friction (CL1, CL2, CL3) capable de former un rapport de vitesse plus bas que ledit premier élément à friction .(CL2, CL3, CL4) lors d'une récupération dudit moteur électrique (8) afin de préparer ledit premier et ledit second élément à friction (CL1 - CL4) dans une condition capable d'un engagement tout en réduisant une partie de ralenti de la course de commande d'un mécanisme de commande (34, 35, 36, 37, 38, 39, 40) destiné à une commutation lors d'une récupération dudit moteur électrique (8).

2. Dispositif de commande de transmission pour véhicule hybride selon la revendication 1,
**caractérisé en ce que,** lors d'une décélération de ladite transmission (5) entre un premier rapport de vitesse et un second rapport de vitesse plus bas que le premier rapport de vitesse de deux rapports de vitesse lors d'une récupération dudit moteur électrique (8), la décélération est effectuée par l'intermédiaire de rapports de vitesse entre le premier et le second rapport de vitesse.
